# FASCICULE DE BREVET EUROPEEN

(11) **EP 0 653 094 B1**
(45) Date de publication et mention de la délivrance du brevet: **21.01.1998**
(21) Numéro de dépôt: 94917054.2
(22) Date de dépôt: 25.05.1994
(51) Int. Cl.: G21C 7/24

(54) **MATERIAU ABSORBANT LES NEUTRONS ET SON PROCEDE DE FABRICATION**
NEUTRONENABSORBERSTOFF UND DESSEN HERSTELLUNGSVERFAHREN
NEUTRON ABSORBER MATERIAL AND METHOD OF MANUFACTURE

(30) Priorité: 26.05.1993 FR 9306304
(43) Date de publication de la demande: 17.05.1995
(73) Titulaire: COMMISSARIAT A L'ENERGIE ATOMIQUE, 75015 Paris (FR)
(72) Inventeur: DECROIX, Guy, Marc, F-94550 Chevilly-la-Rue (FR); GOSSET, Dominique, F-92340 Bourg-la-Reine (FR); KRYGER, Bernard, F-75014 Paris (FR)
(74) Mandataire: Des Termes, Monique
(86) Numéro de dépôt international: FR9400614
(87) Numéro de publication internationale: WO9428556

(56) Documents cités:
- EP-A- 0 359 683
- DE-A- 1 564 226
- US-A- 3 976 735
- JOURNAL OF ALLOYS AND COMPOUNDS, vol.191, no.2, 19 Février 1993, SWITZERLAND pages 191 - 195 ITOH ET AL. 'Synthesis and sinterability of composite powder of the TiB2-B4C system'
- CHEMICAL ABSTRACTS, vol. 99, no. 18, Octobre 1983, Columbus, Ohio, US; abstract no. 148254z, 'Neutron absorber material' page 521 ; & JP5803001 (TOKUSHU MUKI), 19 Janvier 1983
- CHEMICAL ABSTRACTS, vol. 61, no. 11, 1964, Columbus, Ohio, US; abstract no. 12890c, & MATER. FUELS HIGH-TEMP. NUCL.ENERGY APPL. pages 314 - 344 WEIDENBAUM ET AL. 'Properties of some high-temperature control materials'
- ACTA METALLURGICA SINICA (ENGLISH EDITION), vol.2B, no.6, Décembre 1989 pages 397 - 402 LIANG MINXIAN ET AL. 'Microstructure and mechanical properties of TiB2-B4C ceramic composites'

## Description

La présente invention a pour objet un matériau absorbant les neutrons et son procédé de fabrication.

Un matériau de ce type peut être utilisé en particulier dans les réacteurs nucléaires tels que les réacteurs à eau pressurisée et les réacteurs à neutrons rapides.

Actuellement, le matériau absorbant neutronique le plus utilisé dans les réacteurs nucléaires est le carbure de bore, par exemple B₄C, car c'est un matériau peu coûteux, dont on peut moduler l'efficacité en jouant à la fois sur la teneur en isotopes ¹⁰B du bore et sur la densité et qui a par ailleurs de bonnes propriétés d'inertie chimique et un caractère fortement réfractaire. Généralement, il est utilisé sous la forme de pastilles cylindriques empilées dans des gaines métalliques pour constituer les barres de commande des réacteurs.

Toutefois, il présente l'inconvénient d'avoir un mauvais comportement sous irradiation dû à de mauvaises propriétés thermomécaniques (faible conductivité thermique et caractère fragile) qui limitent sa durée de vie. Ainsi, le dégagement de chaleur dû aux captures neutroniques (n, alpha) suffit à induire sa fracturation car les gradients thermiques très importants (jusqu'à 1000°C/cm dans un réacteur nucléaire à neutrons rapides) qui en découlent, conduisent à l'établissement de contraintes excédant la résistance du matériau. Par ailleurs, la génération d'hélium en grande quantité entraîne un gonflement important du matériau et une fissuration microscopique qui peut se traduire à terme par une complète désagrégation des pastilles.

Aussi, des recherches ont été entreprises pour améliorer le comportement sous irradiation du carbure de bore tout en conservant la plus forte efficacité d'absorption neutronique possible.

Le document EP-A-0 359 683 décrit des pastilles absorbant les neutrons obtenues à partir de cristaux d'électrolyse ou de copeaux de hafnium et éventuellement de poudre de carbure de bore.

Les documents Chemical Abstracts, vol 99, n°18, octobre 1983, abstract n°148254z, et Chemical Abstracts, vol 61, n°11, 1964, abstract n°12890c, décrivent l'emploi de borures de Ti, Hf ou Zr comme matériau absorbant les neutrons.

La présente invention a précisément pour objet un matériau absorbant neutronique à base de carbure de bore qui présente les propriétés améliorées mentionnées précédemment. Le matériau absorbant neutronique de l'invention est un matériau composite comprenant une matrice homogène de carbure de bore dans laquelle sont dispersés de façon homogène des amas calibrés d'au moins un borure choisi parmi HfB₂, TiB₂, et ZrB₂, ayant des dimensions de 100 a 500µm, le matériau comprenant au plus 40 % en volume au total de(s) borure(s) HfB₂, TiB₂ et/ou ZrB₂.

Ce matériau est ainsi un matériau composite du type céramique/céramique dans lequel le renforcement est assuré par les amas calibrés du borure HfB₂, TiB₂ et/ou ZrB₂. Le renforcement dû à ces amas calibrés est obtenu grâce à l'existence de champs de contrainte résiduels dans le matériau qui conduisent à une déflexion des fissures au voisinage des amas calibrés les plus petits, et à de fortes concentrations de microfissures dans les amas calibrés les plus gros qui empêchent la libre propagation des fissures.

Pour obtenir ces résultats, il est donc important que les amas calibrés aient des dimensions appropriées; généralement ce sont des amas pseudosphériques dont les dimensions se situent dans la gamme de 100 à 500µm. Par ailleurs, il est avantageux que ces amas présentent une porosité résiduelle formant des microfissures.

De plus, pour obtenir ces résultats, le matériau doit contenir une quantité suffisante de borure(s), mais cette quantité ne doit pas être trop importante pour ne pas nuire à l'efficacité d'absorption neutronique du matériau, la densité en noyaux absorbants étant plus faible dans les diborures que dans le carbure de bore.

Généralement le matériau comprend au plus 40% en volume au total de borure(s) choisi(s) parmi HfB₂, TiB₂ et ZrB₂, de préférence de 20% à 30% en volume de borure(s).

Parmi les borures susceptibles d'être utilisés, le diborure de hafnium HfB₂ est particulièrement intéressant car il possède les propriétés remarquables suivantes :
- il a une excellente efficacité d'absorption neutronique, le hafnium étant plus efficace que le bore dans le domaine des neutrons épithermique ;
- on peut moduler son efficacité en jouant sur sa teneur en ¹⁰B et sur sa densité ;
- il possède très peu de descendants actifs résultant de la capture neutronique ;
- il est très réfractaire puisque sa température de fusion est de 3300°C ;
- il a une bonne conductivité thermique (c'est un conducteur électronique ;
- il possède une bonne inertie chimique ;
- il est totalement compatible chimiquement tant avec le carbure de bore, qu'avec le carbone, ce qui permet de réaliser des mélanges stables avec le carbure de bore et d'autre part d'utiliser les mêmes procédés de mise en forme que ceux retenus pour le carbure de bore, en particulier le frittage sous charge uniaxiale à haute température en matrice de graphite ; et
- il possède un coefficient de dilatation thermique supérieur à celui du carbure de bore, ce qui permet l'établissement de contraintes résiduelles en compression dans la matrice de carbure de bore.

Un matériau composite du type carbure de bore-diborure de titane a été décrit par Nishiyama et al dans Trans JSCM, vol. 11, n°2, 1985, p. 53-62, mais dans ce cas le but recherché était d'améliorer la dureté du carbure de bore par précipitation de fines particules de TiB₂ tout en évitant d'avoir à réaliser le frittage sous charge. Ainsi, ce matériau a une structure différente de celle du matériau composite de l'invention dans lequel le diborure de titane est sous la forme d'amas calibrés de 150 à 500µm en vue d'améliorer la résistance au choc thermique du carbure de bore.

Un poudre composite de TiB₂₋ₓB₄C (avec x = 0,3 ; 0,5 ; 0,7 et 1,0) a été décrite dans Journal of Alloys and Compounds, vol 191 (1993), pages 191-195. Cette poudre est préparée par réaction à l'état solide entre TiCₓN₁₋ₓ et du bore amorphe. Lorsque x = 0,3, la dimension des grains de TiB₂ est 1,5 a 2 µm.

Le matériau composite de l'invention peut être préparé par métallurgie des poudres à partir d'une poudre de carbure de bore et d'amas calibrés de borure.

Aussi, l'invention a également pour objet un procédé de préparation de ce matériau absorbant neutronique, qui consiste à mélanger de façon homogène une poudre de carbure de bore ayant une granulométrie moyenne inférieure à 5µm avec des amas calibrés du ou des borure(s), et à densifier ensuite le mélange par frittage sous pression à une température et pendant une durée suffisantes pour obtenir une densité finale au moins égale à 90% de la densité théorique.

Les amas calibrés de borure peuvent être préparés à partir d'une poudre très fine de borure ayant par exemple une granulométrie inférieure à 5µm en soumettant la poudre à une cuisson sous vide ou sous atmosphère neutre, à une température supérieure à 1000°C, puis en broyant le produit cuit et en tamisant le produit broyé de façon à ne conserver que les amas de taille désirée, par exemple de 100 à 500µm.

Pour la cuisson, la température est choisie en fonction de la granulométrie initiale de la poudre de borure et de façon à ce que le broyage subséquent soit aisé.

Pour la poudre de carbure de bore, on peut obtenir une poudre homogène en dispersant une poudre de carbure de bore de façon aussi homogène que possible, par exemple par application d'ultrasons, dans une barbotine, et en séchant et tamisant ensuite la poudre.

Pour mélanger ensuite cette poudre avec les amas calibrés de borure, on peut utiliser des techniques de mélange classiques.

On peut réaliser ensuite la densification du mélange comme dans le cas du carbure de bore par compression uniaxiale à chaud ou par compression isostatique à chaud, en utilisant dans le premier cas une matrice en graphite et dans le deuxième cas une enveloppe en métal réfractaire, par exemple en titane. La pression utilisée est par exemple dans la gamme de 20 à 200 MPa. La température et la durée du frittage sont choisies pour obtenir la densité finale voulue supérieure à 90% de la densité théorique.

Généralement la température de frittage est dans la gamme allant de 1800 à 2200°C. La durée du frittage est de 15 min à 1h.

L'invention sera mieux comprise à la lecture de l'exemple qui suit donné bien entendu à titre illustratif et non limitatif, en référence au dessin annexé sur lequel :
- la figure 1 est une micrographie illustrant la structure du matériau absorbant de l'invention,
- la figure 2 est une micrographie illustrant l'évolution d'une fissure d'origine thermique dans les amas calibrés du matériau de la figure 1,
- la figure 3 est une micrographie illustrant le mode de transmission d'une fissure dans le matériau de la figure 1, et
- la figure 4 représente à titre comparatif le mode de rupture d'une pastille de B₄C conforme à l'art antérieur.
- la figure 5 est un diagramme représentant le comportement contrainte déformation d'un matériau conforme à l'invention, du B₄C pur et du HfB₂.

L'exemple qui suit illustre la préparation de pastilles de carbure de bore B₄C renforcé par des amas calibrés de diborure de hafnium HfB₂.

Pour réaliser ces pastilles, on part d'une poudre de B₄C ayant une granulométrie inférieure à 5µm et contenant, du fait de son élaboration, des amas de taille allant jusqu'à 1 mm. On disperse cette poudre par ultrasons dans une barbotine d'éthanol puis on la sèche et on la tamise pour disperser les amas.

Par ailleurs, on prépare des amas calibrés de HfB₂. à partir d'une poudre de HfB₂ ayant également une granulométrie inférieure à 5µm. On introduit cette poudre dans un moule en graphite et on la cuit sous vide à une température de 1200°C pendant 30 min. On soumet ensuite le produit cuit à un broyage et un tamisage pour retenir les amas ayant une granulométrie de 400 à 500µm.

On mélange ensuite la poudre de carbure de bore avec les amas calibrés de HfB₂ ainsi séparés de façon à ce que la quantité de HfB₂ représente 20% en volume du mélange.

On prépare ensuite à partir du mélange des pastilles d'un diamètre de 17 mm et d'une hauteur de 25 mm, en introduisant le mélange dans un moule en graphite et en effectuant une compression uniaxiale du mélange dans un four à une température de 2100°C sous une pression de 60 MPa pendant 1 heure.

On obtient ainsi une pastille de matériau composite comprenant une matrice de carbure de bore renforcé par des amas calibrés de HfB₂ ayant une densité de 96 %, soit 4,1 g/cm³.

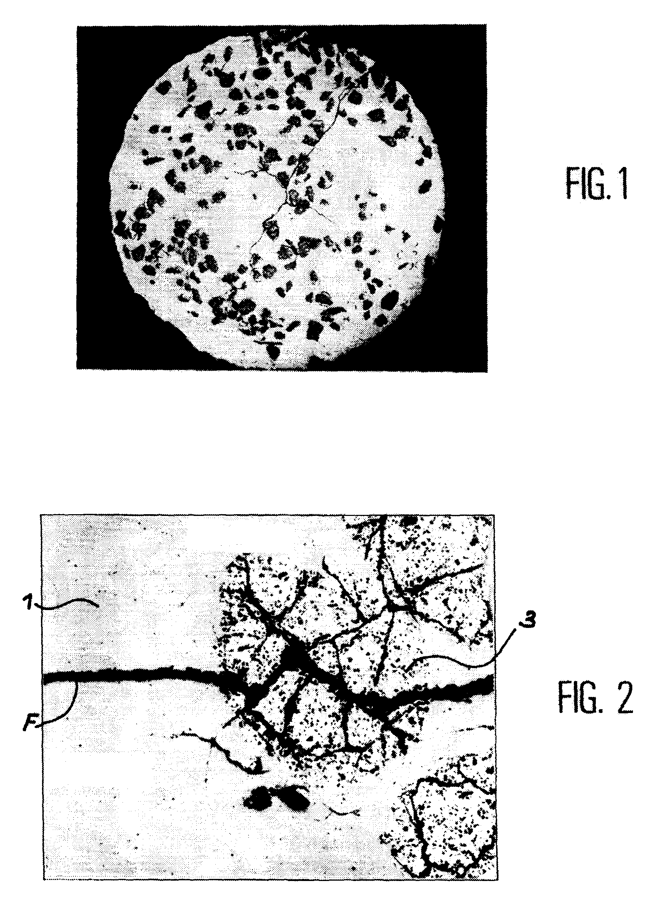

La figure 1 représente une micrographie obtenue avec un grossissement de 5 d'une tranche de 1 mm d'épaisseur découpée dans la pastille lorsque celle-ci est soumise à un choc thermique dans les conditions suivantes : gradient thermique d'environ 500°C entre le coeur et la périphérie du disque imposé dans un four-image à refroidissement.

Sur cette figure, on remarque que des fissures se sont développées dans la pastille sans entraîner sa rupture.

Sur la figure 2, on a représenté avec un grossissement de 100 une partie de la pastille de la figure 1 comportant des amas calibrés microfissurés de HfB₂ de 500µm pour montrer l'évolution d'une fissure d'origine thermique dans un amas de ce type.

Sur cette figure, on remarque que la fissure d'origine thermique F qui évolue dans la matrice 1 de carbure de bore est dispersée lors de sa rencontre avec l'amas calibré 3 de HfB₂ qui est lui-même microfissuré. Il en résulte ainsi une dispersion des fissures, ce qui évite la rupture de la pastille.

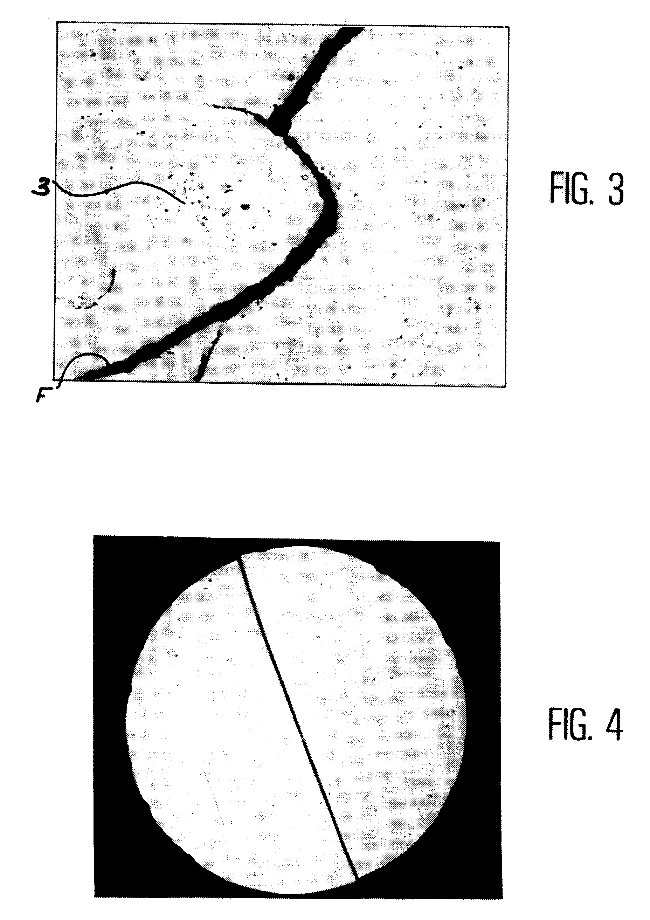

Sur la figure 3, on a représenté une autre région de la pastille de la figure 1 avec un grossissement de 200 pour montrer comment la présence de contraintes résiduelles autour d'un amas calibré 3 de HfB₂ de 150µm entraîne une déflexion de la fissure F qui se propage dans le matériau.

Sur la figure 4, on a représenté à titre comparatif le développement d'une fissure dans une pastille de B₄C préparée dans les mêmes conditions, mais sans amas calibrés, lorsque celle-ci est soumise à un choc thermique correspondant à la moitié de la puissance du choc thermique utilisé dans le cas de la figure 1.

Sur cette figure 4, on constate que la fissure provoque la rupture de la pastille.

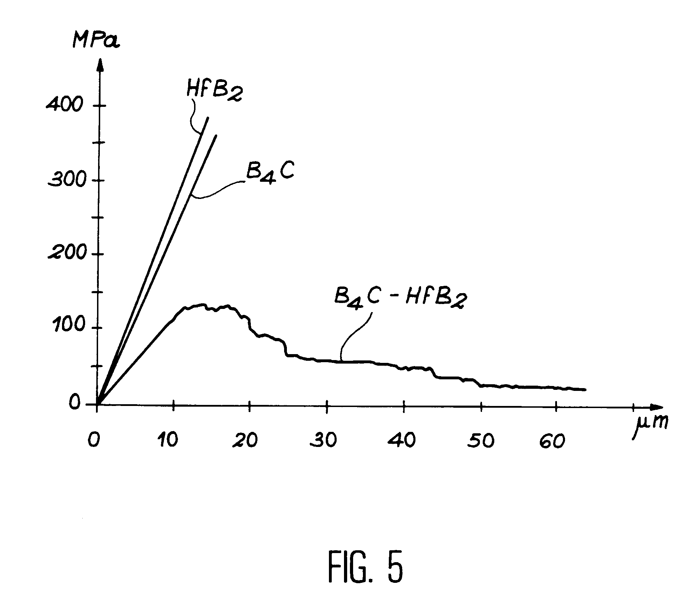

Sur la figure 5, on a représenté le comportement à la déformation du matériau composite B₄C - HfB₂. contenant 20% de HfB₂ sous forme d'amas calibrés de 400 µm, soit la déformation (en micromètres) en fonction de la contrainte appliquée (en MPa). Au vu de cette figure, on remarque que le matériau composite de l'invention B₄C-HfB₂ a un comportement pseudoplastique sans rupture. En revanche, les courbes qui se rapportent respectivement au B₄C pur et au HfB₂ pur testés dans les mêmes conditions, illustrent le comportement fragile de ces matériaux.

Ainsi, le matériau absorbant neutronique de l'invention présente une résistance à la fracturation par choc thermique plus de deux fois plus élevée que celle d'un carbure de bore pur de même densité relative; de même, la diffusivité thermique du composite est bien supérieure à celle du carbure de bore.

De plus, les propriétés mécaniques du matériau absorbant neutronique de l'invention sont meilleures que celles du carbure de bore. En effet, son module d'élasticité apparent est environ deux fois plus faible. Il présente une déformation de type pseudoplastique et un allongement à la rupture pratiquement triplé par rapport à celui du carbure de bore pur.

## Revendications

1. Matériau composite absorbant neutronique comprenant une matrice homogène de carbure de bore dans laquelle sont dispersés de façon homogène des amas calibrés d'au moins un borure choisi parmi HfB₂, TiB₂, et ZrB₂, ayant des dimensions de 100 à 500µm, le matériau comprenant au plus 40 % en volume au total de(s) borure(s) HfB₂, TiB₂ et/ou ZrB₂.

2. Matériau selon la revendication 1, caractérisé en ce que le matériau comprend de 20 à 30 % en volume au total de(s) borure(s) HfB₂, TiB₂ et/ou ZrB₂.

3. Matériau selon l'une quelconque des revendications 1 et 2, caractérisé en ce que les amas calibrés sont constitués uniquement de HfB₂.

4. Procédé de préparation d'un matériau composite selon l'une quelconque des revendications 1 à 3, caractérisé en ce que l'on mélange de façon homogène une poudre de carbure de bore ayant une granulométrie moyenne inférieure à 5µm avec des amas calibrés du (des) borure(s) ayant des dimensions de 100 à 500µm, et on densifie ensuite le mélange par frittage sous pression à une température et pendant une durée suffisantes pour obtenir une densité finale supérieure à 90 % de la densité théorique.

5. Procédé selon la revendications 4, caractérisé en ce que l'on prépare les amas calibrés de borure à partir d'une poudre de borure ayant une granulométrie inférieure à 5µm par cuisson sous vide ou sous atmosphère neutre de la poudre, suivie d'un broyage et d'un tamisage pour séparer les amas de borure ayant une dimension de 100 à 500µm.

6. Procédé selon l'une quelconque des revendications 4 et 5, caractérisé en ce que l'on réalise le frittage par compression uniaxiale à chaud.

7. Procédé selon l'une quelconque des revendications 4 et 5, caractérisé en ce que l'on réalise le frittage par compression isostatique à chaud.

8. Procédé selon l'une quelconque des revendications 4 à 7, caractérisé en ce que la pression de frittage est de 20 à 200 Mpa.

9. Procédé selon l'une quelconque des revendications 5 à 8, caractérisé en ce que la température de frittage est de 1800 à 2200°C, et la durée du frittage est de 15 min à 1h.

## Patentansprüche

1. Neutronenabsorber-Verbundmaterial, eine homogene Matrix aus Borkarbid umfassend, in der auf homogene Weise kalibrierte Ansammlungen bzw. Ballungen von wenigstens einem Borid dispergiert sind, ausgewählt unter HfB₂, TiB₂ und ZrB₂, die Dimensionen von 100 bis 500µm aufweisen, wobei das Material insgesamt höchstens 40 Vol% Borid(e) HfB₂, TiB₂ und/oder ZrB₂ enthält.

2. Material nach Anspruch 1, dadurch gekennzeichnet, daß das Material insgesamt zwischen 20 und 30 Vol% Borid(e) HfB₂, TiB₂ und/oder ZrB₂ enthält.

3. Material nach einem der Ansprüche 1 und 2, dadurch gekennzeichnet, daß die kalibrierten Ballungen nur durch HfB₂ gebildet werden.

4. Herstellungsverfahren eines Verbundmaterials nach einem der Ansprüche 1 bis 3, dadurch gekennzeichnet, daß man ein Borkarbidpulver mit einer mittleren Granulometrie bzw. Korngröße von weniger als 5µm homogen mischt mit kalibrierten Ballungen von Borid(en) mit Dimensionen von 100 bis 500µm, und daß man anschließend die Mischung durch Drucksintern bei einer Temperatur und während einer ausreichenden Dauer verdichtet, um eine Enddichte herzustellen, die höhere als 90% der theoretischen Dichte ist.

5. Verfahren nach Anspruch 4, dadurch gekennzeichnet, daß man die kalibrierten Borid-Ballungen aus einem Boridpulver mit einer Granulometrie kleiner als 5µm herstellt durch Brennen des Pulvers unter Vakuum oder neutraler Atmosphäre, gefolgt von einem Mahlen und einem Sieben, um die Borid-Ballungen mit einer Dimension von 100 bis 500µm abzusondern.

6. Verfahren nach einem der Ansprüche 4 und 5, dadurch gekennzeichnet, daß man das Drucksintern uniaxial bei Wärme bzw. Hitze durchführt.

7. Verfahren nach einem der Ansprüche 4 und 5, dadurch gekennzeichnet, daß man das Drucksintern isostatisch bei Wärme bzw. Hitze durchführt.

8. Verfahren nach einem der Ansprüche 4 bis 7, dadurch gekennzeichnet, daß der Sinterdruck 20 bis 200 Mpa beträgt.

9. Verfahren nach einem der Ansprüche 5 bis 8, dadurch gekennzeichnet, daß die Sintertemperatur 1800 bis 2200°C beträgt und die Sinterdauer 15min bis 1h.

## Claims

1. Composite, neutron-absorbing material comprising a homogeneous, boron carbide matrix, in which are homogeneously dispersed calibrated clusters of at least one boride chosen from among HfB₂, TiB₂ and ZrB₂, having dimensions of 100 to 500 µm, the material also containing at the most 40 vol.% in all of HfB₂, TiB₂ and/or ZrB₂ borides.

2. Material according to claim 1, characterized in that the material incorporates 20 to 30 vol.% in all of HfB₂, TiB₂ and/or ZrB₂ borides.

3. Material according to either of the claims 1 and 2, characterized in that the calibrated clusters are solely constituted by HfB₂.

4. Process for the preparation of a composite material according to any one of the claims 1 to 3, characterized in that the homogeneous mixing takes place of a boron carbide powder having an average grain size below 5 µm with calibrated clusters of the boride or borides and then the mixture is densified by sintering under pressure and at a temperature and for a time sufficient for obtaining a final density higher than 90% of the theoretical density.

5. Process according to claim 4, characterized in that preparation takes place of the calibrated boride clusters from a boride powder having a grain size below 5 µm by baking under vacuum or a neutral atmosphere of the powder, followed by grinding and screening in order to separate the boride clusters of 100 to 500 µm.

6. Process according to either of the claims 4 and 5, characterized in that sintering takes place by hot uniaxial compression.

7. Process according to either of the claims 4 and 5, characterized in that sintering takes place by hot isostatic compression.

8. Process according to any one of the claims 4 to 7, characterized in that the sintering pressure is 20 to 200 MPa.

9. Process according to any one of the claims 5 to 8, characterized in that the sintering temperature is 1800 to 2200°C and the fritting time is 15 min to 1 h.
